# EUROPEAN PATENT APPLICATION

(11) **EP 1 936 989 A1**
(43) Date of publication of application: **25.06.2008**
(21) Application number: 07024603.8
(22) Date of filing: 19.12.2007
(51) Int. Cl.: H04N 7/24, H04N 7/173

(54) **Method and system for content sharing**

(30) Priority: 22.12.2006 US 615662
(71) Applicant: Nortel Networks Limited, St Laurent, Québec H4S 2A9 (CA)
(72) Inventor: Soukup, Martin Jan, Ottawa Ontario K1V 1Y3 (CA); Nannra, Anoop, Orleans Ontario K4A 4M1 (CA)
(74) Representative: Boyce, Conor

(57) **Abstract**

The present invention provides a hyperlinking convention for Internet Protocol (JP) Television (TV) program content. A hyperlink comprises a resource identifier that identifies a location of the program content, and an index to a content segment within the program content. The content segment corresponds to a portion of the program content that is not directly addressable using a resource identifier from a defined content source at which the program content is stored. When user equipment receives the hyperlink, a user may select the hyperlink, and a request is routed based on the resource identifier to a content server where the program content is stored. The content server uses the resource identifier and the index to identify the content segment. The content server accesses the program content based on the resource identifier and selects the content segment based on the index. The content server sends the content segment to the user equipment in response to the request.

## Description

### Field of the Invention

The present invention relates to Internet Protocol (IP) Television (TV) systems and, in particular, to sharing segments of content on IPTV systems including the Internet.

### Background of the Invention

Internet Protocol (IP) Television (TV) is a system for providing TV services over packet-based networks using IP. TV service provided on an IPTV system can include entertainment media services, information media services, advertising media services, personal media content services, person-to-person communication services, and person-to-machine communication services, including the functions of aggregating, storing, offering, selecting, streaming, and controlling such services. Accordingly, IPTV offers the end user increased control, flexibility, and interactivity in selecting and viewing an extensive variety of program content from multiple content sources, including but not limited to real-time broadcast content from commercial stations, video-on-demand (VoD) content, content stored on network-based personal video recorders (nPVRs) and user uploaded content.

IPTV program content may utilize standard protocols, such as Moving Picture Experts Group (MPEG), Real Time Streaming Protocol (RTSP), and Internet Group Management Protocol (IGMP). The user accesses the IPTV program content through user equipment such as a set-top box, personal computer (PC), personal digital assistant (PDA), or other similar device. To decide on the particular program content to watch, the user can view an Electronic Program Guide (EPG), which is a graphic user interface (GUI) that displays a menu of available program content and associated information, including time shown, actors, story line, and other information that may be considered by the user in making a selection.

The user selects the desired program content from the EPG and the program content selected is delivered to the set-top box, or other similar device. The set-top box decrypts or decodes the program content and sends it to the user's TV, monitor, or other viewing equipment for display to and viewing by the user. Additionally, with IPTV service, the EPG can offer the user additional interactive functionality. For example, the user may want to select particular program content but may desire to watch it at a more convenient time other than at the available times shown on the EPG. In such a situation, the user can select the desired program content, but, instead of viewing it at the time shown, download the selected program content to a PVR or access an nPVR service. The nPVR is a service offered by a network where the network downloads real-time broadcast television to a network server, which the user can access. Using the PVR or the nPVR service, the user can view the selected program content at a more convenient time. The additional interactive functionality makes the EPG more of an Interactive Program Guide (IPG), and the terms EPG and IPG may be used interchangeably or together as EPG/IPG to describe the same GUI. The EPG/IPG, therefore, provides functionality for IPTV-based program content similar to that provided by a browser on a PC for web-based content.

Although the EPG/IPG and the web browser provide similar functions, there are drawbacks to the interactive functionality of the EPG/IPG and the IPTV systems, generally. One such drawback is that IPTV systems do not allow the user to dynamically hyperlink program content or a segment of program content, nor do they allow the user to send that hyperlink to other user equipment of the user or user equipment of another user. Because of this drawback, users are limited to advising other users of a particular IPTV program content or a content segment only by word-of-mouth communication. Word-of-mouth communication requires either speaking to another user or sending a message to another user. As such, word-of-mouth communication is inefficient and error-prone as it requires manual navigation of an EPG/IPG, which may be complex in the case of a specific content segment in a specific program content. Additionally, if the user wants to send the content segment to other user equipment, to a server for storing, or to a website, such as YouTube, the user has to manually copy, edit, and send the content segment. Copying, editing, and sending of the content segment of IPTV program content requires significant manual interaction and coordination, system memory and software capacity, and, therefore, is inefficient complicated and time-consuming in addition to requesting moving content out of the domain of the original content provider, reducing the "stickiness" of the content provider's portal, as well as brand and advertisement penetration. Similar problems are more generally faced by any web hyperlinks for audio or video content, since they do not provide indexing within a given item of content, similar to the "#" reference to the NAME tag in HTML, but without the need to define such references in the construction of the media content.

Accordingly, a need exists for a method and system for hyperlinking content segments of IPTV program content, such that a user can dynamically generate a hyperlink to the content segment within the program content and send the hyperlink to other user equipment of the user or to another user, and, upon receiving the hyperlink, the user can select the hyperlink and view the content segment.

### Summary of the Invention

The present invention provides a hyperlinking convention for program content, such as Internet Protocol (IP) Television (TV) program content or radio program content. While monitoring program content on user equipment, a user may dynamically identify a content segment within the program content. The content segment may have a defined scene or be defined by a beginning, ending, or duration, as well as be open-ended. The user equipment generates a hyperlink for the identified content segment. The hyperlink comprises a resource identifier that identifies the location of the program content, and an index for the content segment. The content segment corresponds to a portion of the program content that is not directly addressable using a resource identifier from a defined content source at which the program content is stored. The index may identify a location of the content segment within the program content. The location of the content segment may be identified by specifying a beginning time, an end time, duration, or a particular scene or scenes.

Once the hyperlink for the content segment is generated, the user equipment may, directly or indirectly, send the hyperlink toward other user equipment of the user or user equipment of another user. When user equipment receives the hyperlink, the hyperlink is stored and presented to the associated user. If the user selects the hyperlink, the user equipment will send a request, using the resource identifier and the index of the hyperlink. The request is routed based on the resource identifier to a content server where the program content is stored. The content server uses the resource identifier and the index to identify the content segment. The content server accesses the program content based on the resource identifier and accesses the content segment based on the index. The content server then sends the content segment to the user equipment in response to the request. The content segment may be stored for subsequent presentation to the user or presented immediately to the user.

### Brief Description of the Drawing Figures

The accompanying drawing figures incorporated in and forming a part of this specification illustrate several aspects of the invention, and together with the description serve to explain the principles of the invention.
FIGURE 1 is a block representation of a communication environment showing an Internet Protocol (IP) Television (TV) system according to one embodiment of the present invention.
FIGURE 2 is a communication flow diagram outlining the process for generating and sending a hyperlink according to one embodiment of the present invention.
FIGURE 3 is a communication flow diagram outlining the process for receiving a hyperlink, selecting a content segment based on the hyperlink, and sending the content segment to the user equipment according to one embodiment of the present invention.
FIGURES 4A, 4B, and 4C are communication flow diagrams outlining the process for sending and receiving a hyperlink between user equipment, sending the hyperlink to a content source, and receiving the content segment from the content source, according to embodiments of the present invention.
FIGURE 5 is a block representation of a set-top box according to one embodiment of the present invention.
FIGURE 6 is a block representation of middleware according to one embodiment of the present invention.
FIGURE 7 is a block representation of a content server according to one embodiment of the present invention.

### Detailed Description of the Preferred Embodiments

While viewing program content received over an Internet Protocol (IP) Television (TV) system, the Internet or the like, a user may desire to send or capture a hyperlink for a particular content segment within the program content. The program content may be television or radio content. The user may be viewing the program content using any one of several appropriate pieces of user equipment, such as a TV, computer monitor, personal digital assistant (PDA), mobile telephone, or the like. Using a control device, such as a remote control, keypad or mouse, or other device allowing the user to input information, the user dynamically identifies the content segment within the program content. The user may input user criteria such as the beginning, duration, or end of the content segment, or a particular scene or scenes within the program content. The control device sends the user criteria to the set-top box or other similar user equipment, instructing the set-top box to generate a hyperlink. In response to the user criteria, the set-top box generates the hyperlink. The hyperlink comprises a resource identifier that identifies where the program content is stored and an index to the content segment. The index may identify the content segment within the program content based on the user criteria. If the user does not input any user criteria, the content segment may be based on a stored user profile or the content segment may begin at the time of the hyperlink function selection signal and end at the end of the program content or may be open-ended.

Once the hyperlink is generated, the user, using the control device, may input the location or address of the user equipment or may copy the hyperlink to another location, such as a web page. The user may utilize instant messaging (IM), short message service (SMS), email, or other similar proprietary messaging services for sending the hyperlink. The user then authorizes the set-top box to send the hyperlink. The set-top box sends the hyperlink, directly or indirectly, towards the other user equipment, which may be another set-top box. When the user equipment receives the hyperlink, the user equipment stores the hyperlink and sends the hyperlink to the associated user's viewing equipment, such as a TV, and the hyperlink is presented to the user.

If the user selects the hyperlink, the user equipment, such as the set-top box, will send a request using the resource identifier and the index of the hyperlink. The request is routed based on the resource identifier to a content server where the program content is stored. The resource identifier request may be routed via middleware in the IPTV system. The middleware may comprise content managers and access servers, which control and manage access to and delivery of program content on the IPTV system. The content server uses the resource identifier and the index to identify the content segment. The content server accesses the program content based on the resource identifier and accesses the content segment based on the index. Once accessed, the content server sends the content segment towards the user equipment in response to the request. The content segment may be stored for subsequent presentation to the user or may be presented immediately to the user. If the index is placed in the request header rather than in the URI, content servers that do not support this convention will continue to display the requested content, although without the requested indexing, providing backwards compatibility.

Program content may include real-time broadcast content from commercial stations, video-on-demand (VoD) content, content stored on network-based personal video recorders (nPVRs), user uploaded content and any other form of program content that an IPTV service may provide. Additionally, the user equipment may include set-top boxes, TVs, PCs, PDAs, mobile telephones, remote controls, keypads, and any other device that allow a user to select, control, receive, send, decode or decrypt, present, and view IPTV program content. Attention is directed to European Patent Application No. 07021799.7, "Multimedia Subsystem Control For Internet Protocol Based Television Services". For the purpose of brevity, this invention will be described in the context of a set-top box, TV, and remote controller, which, collectively, will be referred to as user equipment. Additionally, two sets of user equipment will be used to describe receiving IPTV program content and generating, sending, and receiving hyperlinks. It should be understood that describing aspects of the present invention referring to each user equipment is only to facilitate a description of the present invention. Accordingly, it should not be interpreted as indicating any similarities or differences between the two sets of user equipment. Prior to delving into the details of the present invention, an overview of a communication environment in which the present invention may be employed is described.

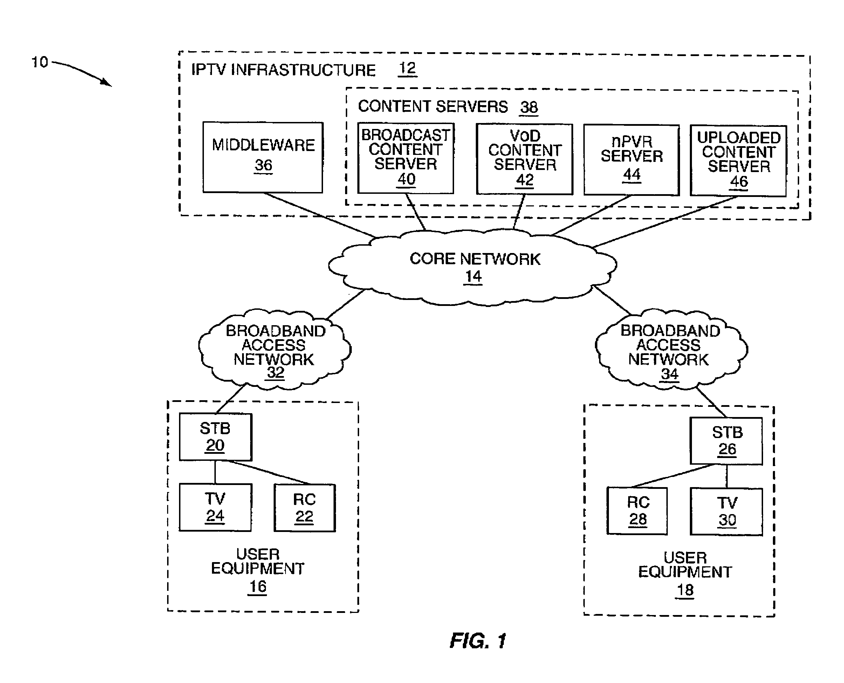

With reference to Figure 1, a communication environment 10 is provided wherein an IPTV infrastructure 12 provides IPTV services and delivers program content through a core network 14 to user equipment 16 and user equipment 18. The user equipment 16 includes a set-top box (STB) 20, a remote controller (RC) 22, and a TV 24. The user equipment 18 includes a set-top box (STB) 26, a remote controller (RC) 28, and a TV 30. The user equipment 16 couples to the core network 14 through broadband access network 32. The user equipment 18 couples to core network 14 through broadband access network 34. The broadband access networks 32 and 34 may be a cable or a digital subscriber line (DSL) network, or other network that allows access to broadband services and content. Although not shown in Figure 1, the broadband access networks 32 and 34 should be understood to include any edge and gateway devices necessary to support the delivery of IPTV services and program content. The set-top box 20 receives and processes the IPTV services, including decoding or decrypting any incoming program content, and provides the program content to TV 24 to enable the user to view the program content. The remote controller 22 is used by a user to select, view, and control program content on TV 24.

The IPTV infrastructure 12 includes middleware 36. The middleware 36 may comprise the necessary devices to administrate, operate, control, manage, and provision the IPTV system. For example, the middleware 36 may control and manage receiving, storing, accessing, and encrypting the program content. In addition, the middleware 36 may manage and control authenticating the user and the user's rights to the program content, delivering the program content and a decrypting key to the user, and accounting for and billing the user for the program content and the IPTV service. The IPTV infrastructure 12 may also include content servers 38, which store the program content and deliver the program content as instructed by the middleware 36.

In Figure 1, four content servers 38 are illustrated. A broadcast content server 40 captures, stores, regenerates broadcast channel program content, if necessary, and may send the broadcast program content to user equipment 16. The broadcast content server 40 may convert the broadcast channel content to a suitable format for the IPTV system prior to sending the broadcast channel program content to the user equipment 16. The broadcast content server 40 may send broadcast channels by IP multi-casting. A VoD content server 42 stores and may send program content in the form of commercial videos to user equipment 16. An nPVR content server 44 stores broadcast channel program content for access by the user. The user, through the use of the set-top box 20, may request a certain broadcast channel program content. In response, the nPVR content server 44 sends to the set-top box 20 the requested broadcast channel program content. In contrast to the broadcast content server 40, the VoD content server 42 and the nPVR content server 44 may send program content toward the set-top box 20 in a unicast manner. The IPTV infrastructure 12 may also include an uploaded content server 46. The uploaded content server 46 may receive and store any user generated or provisioned program content sent to the IPTV system by a user. For example, the user may desire to produce personal program content for viewing by a specific audience, such as family, friends or colleagues. Also, a user may up-load content for viewing by any user with IPTV service, or more generally, by any user with Internet access. Such a user may send the personal program content to the uploaded content server 46 where it is stored. A user then may request uploaded program content stored on the uploaded content server 46. In response, the uploaded content server 46 may send the requested uploaded program content to the set-top box 20.

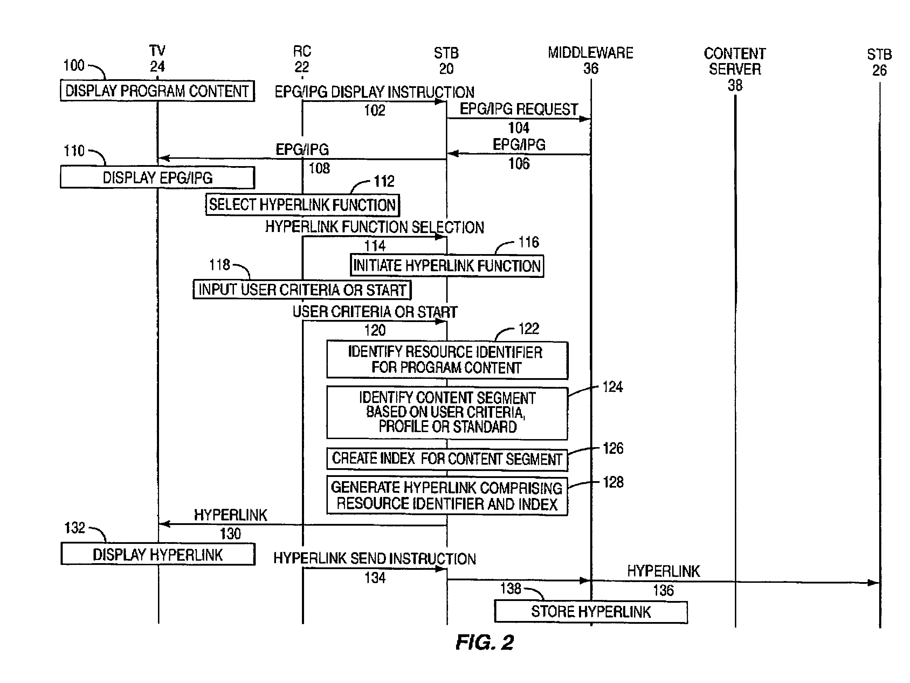

With reference to Figure 2, a communication flow diagram illustrating the process for generating and sending a hyperlink according to one embodiment of the present invention is provided. The flow diagram of Figure 2 assumes that the user, through set-top box 20, already has received program content, which the set-top box 20 has sent to the TV 24. The TV 24 displays the program content for viewing by the user (Step 100). While viewing the program content, the user decides to create a hyperlink to a content segment of the program content. The user may use the remote controller 22 to send an instruction to the set-top box 20 to activate the Electronic Program Guide/Interactive Program Guide (EPG/IPG) which provides interactive functionality for the user (Step 102). The set-top box 20 sends a message to the middleware 36 of the IPTV system requesting the EPG/IPG (Step 104). The middleware 36 responds by sending the EPG/IPG to the set-top box 20 (Step 106). Alternatively, the set-top box 20 may have the EPG/IPG stored in its memory, in which case, the set-top box 20 will not send a request to the middleware 36. The set-top box 20, upon receiving the EPG/IPG from the middleware 36, or if the set-top box 20 already has the EPG/IPG in its memory, sends the EPG/IPG to the TV 24 (Step 108).

TV 24 displays the EPG/IPG for viewing by the user (Step 110). Using remote controller 22, the user may select a hyperlink function option on the EPG/IPG (Step 112). Alternatively, the user may select the hyperlink function via a function key on the remote controller 22 without utilizing the EPG/IPG. In either case, when the user selects the hyperlink function, the remote controller 22 sends a hyperlink function selection signal to the set-top box 20 (Step 114). Upon receipt of the hyperlink function selection signal, the set-top box 20 initiates the hyperlink function (Step 116). The user may then input user criteria to identify the content segment (Step 118). The user criteria may identify a beginning time, end time, duration, or a particular scene or scenes, or a combination thereof. Alternatively, the user may not input any user criteria and may simply input a start signal. The remote controller 22 sends the user criteria or the start signal to the set-top box 24 (Step 120).

Upon receiving the user criteria or the start signal without the user criteria, the set-top box 20 identifies a resource identifier for the program content (Step 122). The set-top box 20 then identifies the content segment based on the user criteria input (Step 124). Alternatively, if the user inputs the start signal without any user criteria, the set-top box 20 may identify the content segment based on a stored user profile or, if there is no stored profile, the set-top box 20 may, as a standard action, identify the content segment to begin at the time of the initiation of the hyperlink function and end at the end of the program content, after a predetermined time, or never. Since the content segment is a portion of the program content, the content segment is less than the program content. Additionally, the portion of the program content that is the content segment is not stored as a predefined content segment at a content source and is not directly addressable using a resource identifier from a defined content source at which the program content is stored.

Once the set-top box 20 identifies the content segment, the set-top box 20 creates an index to the content segment (Step 126). The set-top box then generates the hyperlink comprising the resource identifier and the index (Step 128). Once the set-top box 20 generates the hyperlink, the set-top box 20 sends the hyperlink to the TV 24 (Step 130), which displays the hyperlink for the user to view (Step 132). Using the remote controller 22, the user may instruct the set-top box 20 to send the hyperlink. Additionally, the user may provide a location to where the hyperlink should be sent. The location may be an address of other user equipment. Advantageously, the EPG/IPG may include a 'send link' option. In such a case, the user may instruct the set-top box 20 to send the hyperlink by selecting the 'send link' option (Step 134). Upon receiving the hyperlink send instruction, the set-top box 20 sends the hyperlink towards the user equipment 18, which in Figure 2, is shown as set-top box 26. The hyperlink may be sent directly to the set-top box 26 or may be sent via the middleware 36 or other mechanism (Step 136). If the hyperlink is sent via the middleware 36, the middleware 36 stores the hyperlink (Step 138) and may filter hyperlinks sent between subscribers according to policy. The user may utilize IM, SMS, email, or other similar messaging services for sending the hyperlink.

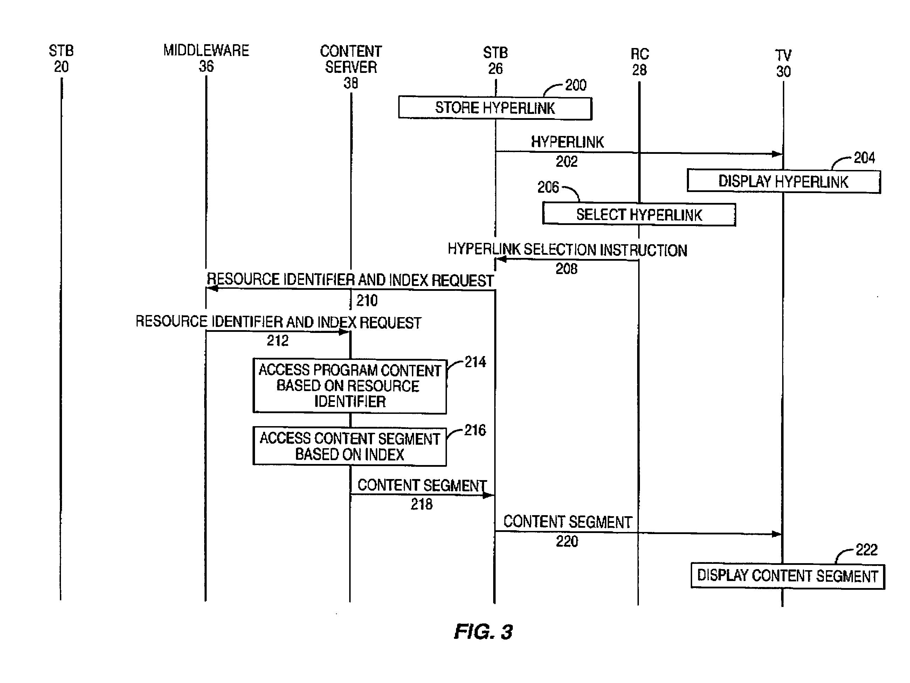

With reference to Figure 3, a communication flow diagram outlining the process for receiving a hyperlink, selecting a content segment based on the hyperlink, and sending the content segment to the user equipment is provided. In Figure 3, it is assumed that the user equipment, specifically, set-top box 26, has already received a hyperlink. Upon receiving the hyperlink, set-top box 26 stores the hyperlink in its memory (Step 200). Set-top box 26 may then send the hyperlink to TV 30 (Step 202). TV 30 displays the hyperlink for the user to view (Step 204). Using remote controller 28, the user may select the hyperlink (Step 206). Upon selecting the hyperlink, remote controller 28 sends a hyperlink selection instruction to set-top box 26 (Step 208). Set-top box 26 sends a resource identifier and index request, which is routed via the middleware 36 to a content server 38 where the program content is stored (Step 210). Upon receiving the resource identifier and index request, the middleware 36 sends the resource identifier and index request to the content server 38 (Step 212). Upon receiving the resource identifier and index request, the content server 38 accesses the program content based on the resource identifier (Step 214). The content server 38 will then access the content segment based on the index (Step 216). The content server 38 then sends the content segment toward the set-top box 26 (Step 218). The set-top box 26 may store or send the content segment to the TV 30 (Step 220). The TV 30 displays the content segment for the user to view (Step 222).

A uniform resource locater (URL) of the hyperlink generated by the set-top box 20 may have a format according to the following examples:

### Example 1

### IPTV://npvrserver/friends/ep22?begin="13:44.5"&end="20:30"

Where:
*IPTV:*//*npvrserver*/*friends*/*ep22* is the resource identifier, which locates the program content at the IPTV infrastructure, in the nPVR content server, in the Friends directory in the nPVR content server and in the file identified as episode 22 within the Friends directory.
The index *?begin="13:44.5"&end="20:30"* identifies the location within the program content of the content segment. The content segment begins at 13 minutes and 44.5 seconds from the start of the program content and ends 20 minutes and 30 seconds from the start of the program content.

### Example 2

### IPTV://broadcastcontentserver/ABC/bostonlegal?scene="2"

Where:
*IPTV:*//*broadcastcontentserver*/*ABC*/*bostonlegal* is the resource identifier, which locates the program content at the IPTV infrastructure, in the broadcast content server, in the ABC directory in the broadcast content server and in the Boston Legal file within the ABC directory.
The index *?scene*="*2*" identifies a specific scene in the program content. The beginning and ending point of the specific scene may be defined using Moving Picture Experts Group (MPEG) meta-data. For example, the content segment may be the program content that is shown between two commercials.

### Example 3

### IPTV://uploadedserver/johndoe/SeminarDecember12,2006?begin="10:00"&dur="00: 30"

Where
*IPTV:*//*uploadedserver*/*johndoe*/*SeminarDecember12,2006* is the resource identifier, which locates the program content at the IPTV infrastructure, in the uploaded content server, in the John Doe directory in the uploaded content server and in the file identified as a Seminar December 12, 2006 within the John Doe directory.
The index *?begin="10:00"&dur="00:30"* identifies the location within the program content of the content segment. The content segment begins at 10 minutes and 0 seconds from the start of the program content and extends for a duration of 30 seconds where it ends.

Additionally, a set-top box, or other similar device, may store in memory a history of hyperlinks sent or received by the set-top box to allow access in the future. Advantageously, a user may be able to access the history through the EPG/IPG. Any content segment that is no longer available may be automatically deleted from the history, or, alternatively disabled or "grayed-out".

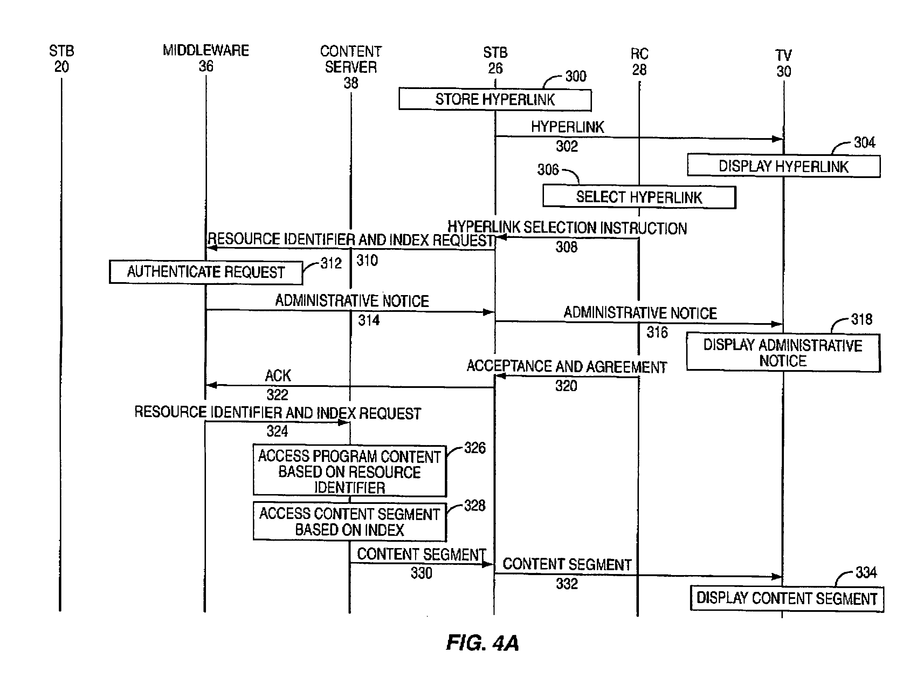

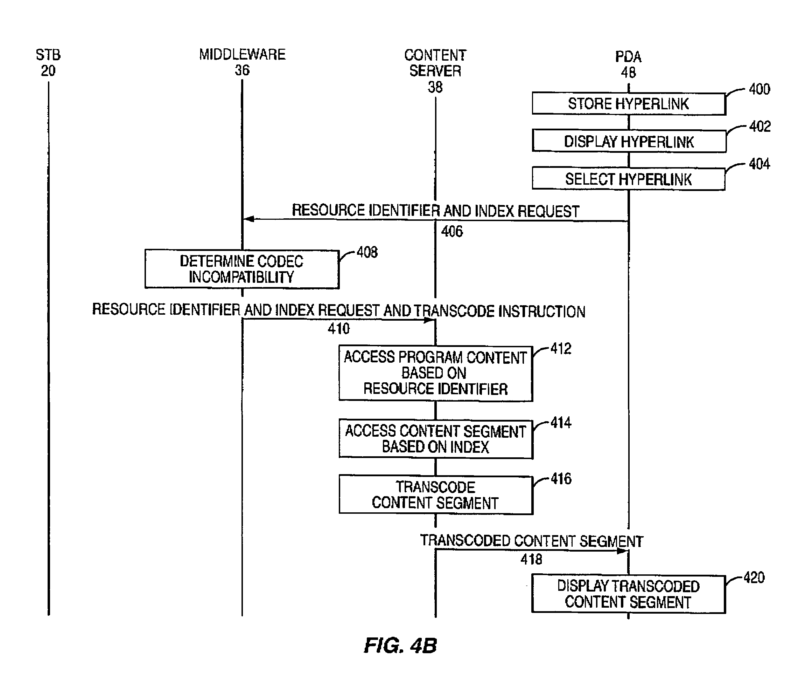

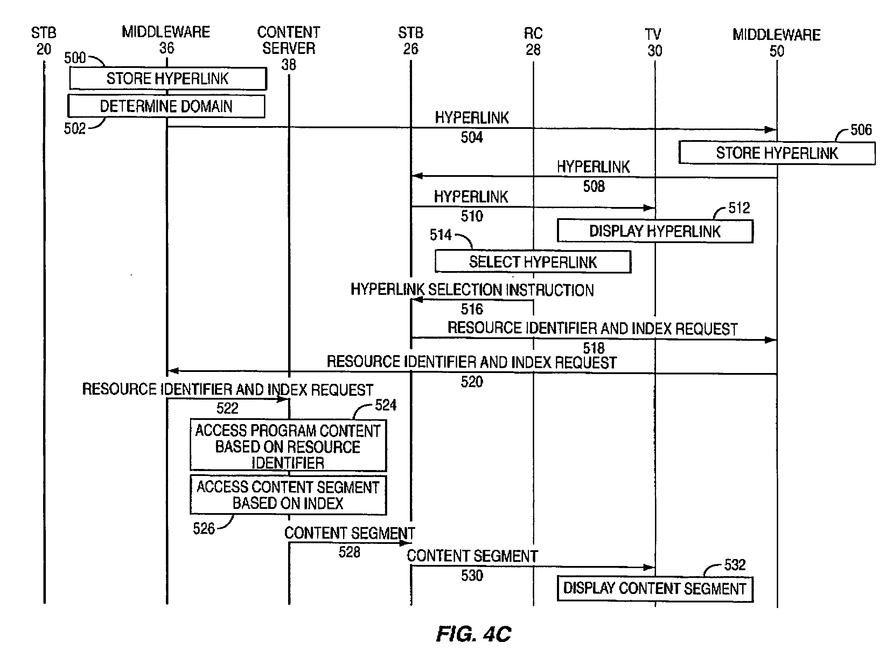

With reference to Figures 4A, 4B, and 4C, communication flow diagrams outlining processes for receiving a hyperlink, selecting a content segment based on the hyperlink and sending the content segment to the user equipment are provided. Figures 4A, 4B, and 4C assume that the hyperlink has already been generated according to the process outlined in Figure 2 and sent by set-top box 20 to set-top box 26. In Figure 4A, set-top box 26 stores the hyperlink (Step 300). The set-top box 26 then sends the hyperlink or simply an indication of the availability of the hyperlink to TV 30 (Step 302). Upon receiving the hyperlink, TV 30 displays it for viewing by the user (Step 304). The user selects the hyperlink using remote controller 28 (Step 306), which sends a hyperlink selection instruction to set-top box 26 (Step 308). Upon receiving the hyperlink selection instruction, set-top box 26 sends a resource identifier and index request, which is routed to the content server 38 via the middleware 36 (Step 310). The middleware 36 authenticates the request to confirm that the user has the right to receive the program content (Step 312). This may include that the user has an active subscription with the IPTV service with respect to the particular program content and has paid the subscription fee or any other administrative issue that may affect the user's right to receive the program content.

If the user does not have such right, the middleware 36 may send an administrative notice, which may include a purchase offer for such program content, balance due statement or the like to the set-top box 26 (Step 314). Set-top box 26 then sends the administrative notice to the TV 30 for display and viewing by the user (Step 316). The TV 30 displays the administrative notice (Step 318). If the user accepts and agrees to the purchase, or agrees to clear the balance due and to satisfy any requirements imposed by the IPTV system, the user, using the remote controller 28, indicates an acceptance and agreement (Step 320). The set-top box 26 receives the acceptance and agreement indication and sends an acknowledge (ACK) message to the middleware 36 (Step 322). Upon receiving the ACK message or, if the middleware 36 had initially authenticated the user, the middleware 36 routes the resource identifier and index request to the content server 38 where the program content is stored (Step 324). Upon receiving the resource identifier and index request, the content server 38 accesses the program content based on the resource identifier (Step 326). The content server 38 then accesses the content segment based on the index (Step 328). The content server 38 then sends the content segment toward the set-top box 26 (Step 330). Upon receiving the content segment, the set-top box 26 sends the content segment to the TV 30 (Step 332). TV 30 displays the content segment for the user to view (Step 334).

With reference to Figure 4B, a communication flow diagram outlining the process for receiving a hyperlink, selecting a content segment based on the hyperlink, transcoding the content segment, and sending the transcoded content segment to the user equipment is provided. In Figure 4B, the user equipment receiving the hyperlink is not a set-top box as in the previous figures, but a device that uses a different codec or content format than that in which the program content is encoded or formatted. Such a device, for example, may be a PDA, such as PDA 48. In Figure 4B, upon receiving the hyperlink, PDA 48 stores the hyperlink (Step 400). PDA 48 then displays the hyperlink (Step 402). Using the keypad on the PDA 48, the user selects the hyperlink (Step 404). Upon the user selecting the hyperlink, the PDA 48 sends the resource identifier and index request which is routed to the content server 38 via the middleware 36 (Step 406). The middleware 36 determines that the program content is coded using a codec that is incompatible with the PDA 48 and, therefore, the content segment will not adequately present on the PDA 48 (Step 408). The middleware 36 will route the resource identifier and index request to the content server 38 where the program content is stored with instructions to transcode the content segment into a codec compatible with the PDA 48, if the segment is not already available in a potentially distributed cache of transcoded content segments (Step 410). Upon receiving the resource identifier and index request, the content server 38 accesses the program content based on the resource identifier (Step 412). The content server 38 will then access the content segment based on the index (Step 414). After accessing the content segment, the content server will transcode, or request transcoding of, the content segment into a codec compatible with the PDA 48 (Step 416). The content server 38 then sends the transcoded content segment toward the PDA 48 (Step 418). Upon receiving the content segment, PDA 48 displays the content segment (Step 420).

With reference to Figure 4C, a communication flow diagram outlining the process for receiving and sending a hyperlink between user equipment associated with different IPTV service provider domains, selecting a content segment based on the hyperlink, and sending the content segment to the user equipment is provided. In Figure 4C, set-top box 20 and set-top box 26 are associated with different IPTV service providers. Because of this, two different middleware may interact. In Figure 4C, upon receiving the hyperlink from set-top box 20, middleware 36 stores the hyperlink (Step 500). Middleware 36 then reads the address of the user equipment to which the hyperlink is to be sent and determines that the user equipment is in a different IPTV service provider's domain (Step 502). Middleware 36 sends the hyperlink to middleware 50 which is in the other IPTV service provider's domain (Step 504). Middleware 50 stores the hyperlink (Step 506) and then sends the hyperlink toward set-top box 26 (Step 508). Middleware 50 is acting as a proxy for middleware 36. Upon receiving the hyperlink, set-top box 26 sends the hyperlink to TV 30 (Step 510). TV 30 displays the hyperlink for the user to view (Step 512). Using remote controller 28, the user may select the hyperlink (Step 514). Upon selecting the hyperlink, remote controller 28 sends a hyperlink selection instruction to set-top box 26 (Step 516). Set-top box 26 sends a resource identifier and index request to content server 38, which is routed via middleware 50 (Step 518). Middleware 50 sends the resource identifier and index request to middleware 36 (Step 520). Middleware 36 then routes the resource identifier and index request to content server 38 where the program content is stored (Step 522). Upon receiving the resource identifier and index request, the content server 38 accesses the program content based on the resource identifier (Step 524). The content server 38 will then access the content segment based on the index (Step 526). The content server 38 then sends the content segment toward the set-top box 26 (Step 528). Upon receiving the content segment, the set-top box 26 sends the content segment to the TV 30 (Step 530). The TV 30 displays the content segment for the user to view (Step 532).

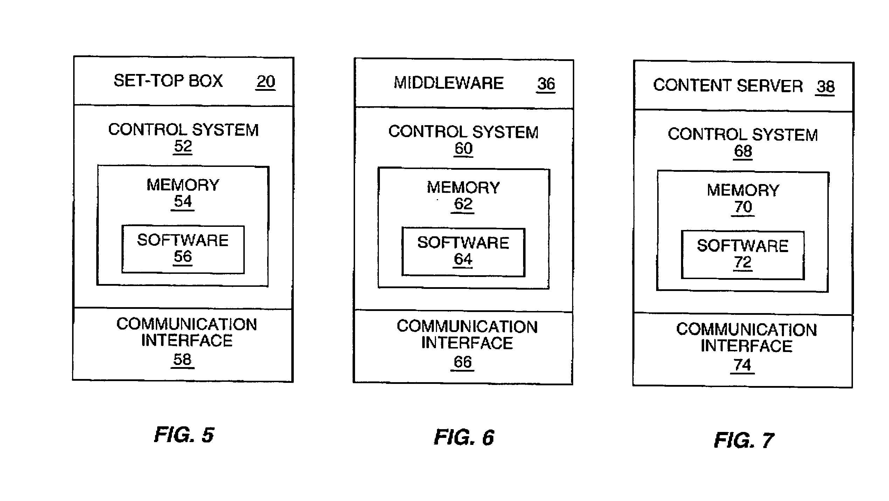

With reference to Figure 5, a block representation of the set-top box 20 is illustrated. It should be understood that although Figure 5 is directed to set-top box 20, Figure 5 similarly applies to set-top box 26 and PDA 48. Set-top box 20 may include a control system 52 having sufficient memory 54 for the requisite software 56 to operate as described above. The control system 52 will be associated with a communication interface 58 to facilitate communication with other nodes in the communication environment 10.

With reference to Figure 6, a block representation of the middleware 36 is illustrated. Middleware 36 may include a control system 60 having sufficient memory 62 for the requisite software 64 to operate as described above. The control system 60 will be associated with a communication interface 66 to facilitate communication with other nodes in the communication environment 10.

With reference to Figure 7, a block representation of the content server 38 is illustrated. It should be understood that Figure 6 applies to broadcast content server 40, VoD content server 42, nPVR content server 44 and uploaded content server 46. Content server 38 may include a control system 68 having sufficient memory 70 for the requisite software 72 to operate as described above. The control system 68 will be associated with a communication interface 74 to facilitate communication with other nodes in the communication environment 10.

## Claims

1. A method of sharing a content segment, the method comprising:
• identifying a content segment within program content;
• generating a hyperlink comprising a resource identifier associated with the program content and an index associated with the content segment; and
• sending the hyperlink toward user equipment.

2. The method of claim 1 wherein the program content is one of: television content or radio content.

3. The method of claim 1 wherein the hyperlink is sent toward the user equipment via at least one of the group consisting of: instant messaging (IM), short message service (SMS), and email.

4. The method of claim 1 wherein identifying the content segment within the program content comprises identifying one of:
a scene within the program content;
a beginning location within the program content;
a duration of the content segment; or
an end location within the program content

5. A method comprising:
• receiving from user equipment a request comprising a resource identifier for program content and an index for a content segment of the program content, the request resulting from a user selecting a hyperlink comprising the resource identifier and the index;
• identifying the program content based on the resource identifier;
• accessing the content segment of the program content based on the index; and
• sending the content segment toward the user equipment.

6. The method of claim 1 or 5 wherein the content segment corresponds to a portion of the program content that is not directly addressable using the resource identifier from a defined content source at which the program content is stored.

7. The method of claim 6 wherein the content segment is less than the program content.

8. The method of claim 6 wherein the portion of the program content is not stored as a predefined content segment at the defined content source.

9. The method of claim 6 when dependent on claim 5 further comprising authenticating the user of the user equipment to confirm that the user has a right to receive the content segment.

10. The method of claim 6 when dependent on claim 5 further comprising transcoding the content segment such that the content segment will adequately present on the user equipment.

11. A system for sharing a content segment, the system comprising:
• at least one interface facilitating sharing a content segment; and
• at least one control system associated with the at least one interface and adapted to:
• identify a content segment within program content;
• generate a hyperlink comprising a resource identifier associated with the program content and an index associated with the content segment; and
• send the hyperlink toward user equipment.
